# EUROPEAN PATENT SPECIFICATION

(11) **EP 2 203 390 B1**
(45) Date of publication and mention of the grant of the patent: **27.04.2011**
(21) Application number: 08838811.1
(22) Date of filing: 14.10.2008
(51) Int. Cl.: C02F 1/22, C02F 103/08

(54) **PROCESS FOR THE REDUCTION OF THE CONCENTRATION OF SALTS IN AN AQUEOUS STREAM CONTAINING THEM**
VERFAHREN ZUR REDUKTION DER KONZENTRATION VON SALZEN IN EINEM DIESE ENTHALTENDE WÄSSRIGEN STROM
PROCÉDÉ DE RÉDUCTION DE LA CONCENTRATION EN SELS DANS UN FLUX AQUEUX LES CONTENANT

(30) Priority: 18.10.2007 IT MI20072021
(43) Date of publication of application: 07.07.2010
(73) Proprietor: ENI S.p.A., 00144 Rome (IT)
(72) Inventor: MOLE, Francesco, I-20052 Monza (MI) (IT); NEGRISOLO, Francesco, I-20099 Sesto San Giovanni (MI) (IT); TAGLIA, Antonio, I-20125 Milan (IT)
(74) Representative: Coletti, Raimondo
(86) International application number: PCT/EP2008/008852
(87) International publication number: WO 2009/049907

(56) References cited:
- US-A- 3 675 436
- US-A- 3 892 103

## Description

The present invention describes a process for the reduction of the concentration of salts in an aqueous stream containing them which can be applied in particular for the desalination of seawater.

There are two solutions in the known art for the desalination of water:
- desalination by direct freezing;
- desalination by indirect freezing on surfaces.

The desalination process by direct freezing consists in a crystallization by means of direct freezing, a separation and washing phase of the ice, melting of the ice, separation of the coolant residues from the water produced. In crystallization by direct freezing, the coolant is injected directly into the stream containing salts to be frozen.

The desalination process by indirect freezing consists in the partial freezing in successive steps of the water to be desalinated on an exchange surface, draining of the residual brine, melting of the ice produced and sending to a new step for a further purification step until the desired purity is reached.

Both solutions have various drawbacks.

Desalination by direct freezing has the following critical technical aspects:
- danger of the formation of hydrates due to the direct contact between water and coolant which drastically reduces the process performances;
- the washing phase is extremely critical due to the presence of the coolant which can contaminate the water produced;
- the single separation and washing apparatus is extremely expensive due to the high washing efficiency that this phase must have to eliminate the coolant from the water produced;
- in spite of the efficiency of the washing phase, a final stripping of the water produced is necessary to ensure that the residual traces of coolant are lower than the limits allowed.

Desalination by indirect freezing, however, has the following critical technical aspects:
- low thermal efficiency due to the fact of having to freeze and melt the water several times to obtain the required purity;
- each single step has a batch functioning for which the exchange surfaces are continuously cooled and heated with consequent thermal fatigue problems.

It has now been found that by effecting the production of ice by means of continuous crystallization in suspension with external cooling, the critical aspects of the solutions of the known art are overcome.

This type of crystallization has the advantage of not having direct contact between coolant fluid and the brine to be frozen, overcoming all the critical aspects of the known art for desalination by direct freezing, associated with direct contact between water and coolant.

In the process proposed, moreover, the formation of ice essentially takes place in the liquid bulk and not on the exchange surface, as occurs, on the contrary, in the processes of the known art, thus eliminating the critical issue caused by batch functioning.

Furthermore, in the process proposed, the freezing takes place in a single step in continuous, eliminating problems of thermal efficiency caused by desalination by indirect contact present in the known art.

The process, object of the present invention, for the reduction of the concentration of salts in an aqueous stream containing them comprises the following steps:
- production of ice by continuous crystallization in suspension obtained by the partial freezing of said aqueous stream, effected by means of indirect heat exchange with a cold fluid having a temperature lower than or equal to -2°C;
- separation between the ice produced and the concentrated brine obtained by partial freezing and subsequent washing of the ice in one or more steps;
- melting of the separated and washed ice to obtain an aqueous stream with a reduced concentration of salts.

The cold fluid having a temperature equal to or less than -2°C is preferably a fluid which absorbs heat passing from liquid to gaseous state or a fluid which absorbs heat in supercritical conditions. In particular, the cold fluid is preferably selected from LNG (liquefied natural gas), LPG (liquefied petroleum gas), LH₂ (liquid hydrogen), LN₂ (liquid nitrogen), LO₂ (liquid oxygen), LCO₂ (liquid carbon dioxide), even more preferably LNG.

The aqueous stream containing salts can be preferably seawater or industrial waste containing saline pollutants.

The stage of crystallization in suspension can be preferably obtained by means of two apparatuses, a crystallizer and a heat exchanger.

In the stage of crystallization thus configured, the aqueous stream containing salts is fed to the crystallizer in which a suspension of ice crystals and concentrated brine already formed, called "slurry", is contained. A stream of slurry is continuously recirculated between the crystallizer and the heat exchanger where it is subcooled in order to cause the partial freezing of the aqueous stream fed to the crystallizer.

The preferred solution for the crystallizer is a crystallizer in suspension, preferably of the "Draft Tube Baffle" type or with forced circulation, with external cooling; other types of crystallizers with indirect cooling can also be used, such as for example, a crystallizer in suspension with a scraped surface exchanger.

The aqueous stream to be frozen has, inside the exchanger selected, velocities preferably higher than or equal to 1 m/s. In the crystallizer, on the other hand, a higher velocity than the floating velocity of the ice crystals is preferably selected.

The residence time in the crystallizer is dimensioned so as to obtain ice crystals which are sufficiently large for the subsequent separation and washing phases; the average dimension of the ice crystals is preferably greater than 0.2 mm.

The separation of the ice formed can be preferably effected by rotating vacuum filters or by centrifuge.

The subsequent washing is preferably effected in two steps, of which the first is effected directly either on the filter or on the centrifuge, the second is effected for example by means of an elutriation column.

The melting step of the ice can be effected by means of an exchanger with a source having a temperature higher than 0°C.

In particular, the melting unit is preferably similar to the crystallizer but with a lower residence time as the dynamics of the melting process is more rapid than the growth dynamics.

The dimensions of the melting system depend a lot on the temperature of the heat source to be used.

Before being sent to the ice production step, the aqueous stream can be preferably subjected to precooling.

In this case, the precooling of the aqueous stream is preferably effected using the aqueous stream at a reduced concentration of salts obtained and/or the concentrated brine produced in the ice separation.

If a fluid is used as cold fluid at a temperature lower than -50°C, such as for example LNG, it is preferable to also use one or more intermediate fluids which allow to reduce temperature difference.

In particular, if LNG is used, there are preferably two intermediate fluids with relative exchange circuits, of which:
- the first intermediate fluid exchanges in a closed circuit on one side with LNG, having an inlet temperature ranging from -15°C to -5°C and the outlet temperature ranging from ranging from -30°C to -60°C. The LNG, which is at an inlet temperature ranging from -162°C to -130°C is heated and/or vaporized to a temperature ranging from -60°C to 10°C.
- the first intermediate fluid exchanges on the other side with the second intermediate fluid, having an inlet temperature ranging from -30°C to -60°C and an outlet temperature ranging from -15°C and -5°C.
- the second intermediate fluid exchanges in a closed circuit on one side with the first intermediate fluid, having an inlet temperature ranging from -2°C to -10°C and an outlet temperature ranging from -17°C and -9°C.
- the second intermediate fluid exchanges on the other side with the crystallizer for the production of ice, having an inlet temperature ranging from -17°C to -9°C and an outlet temperature ranging from -2°C and -10°C.

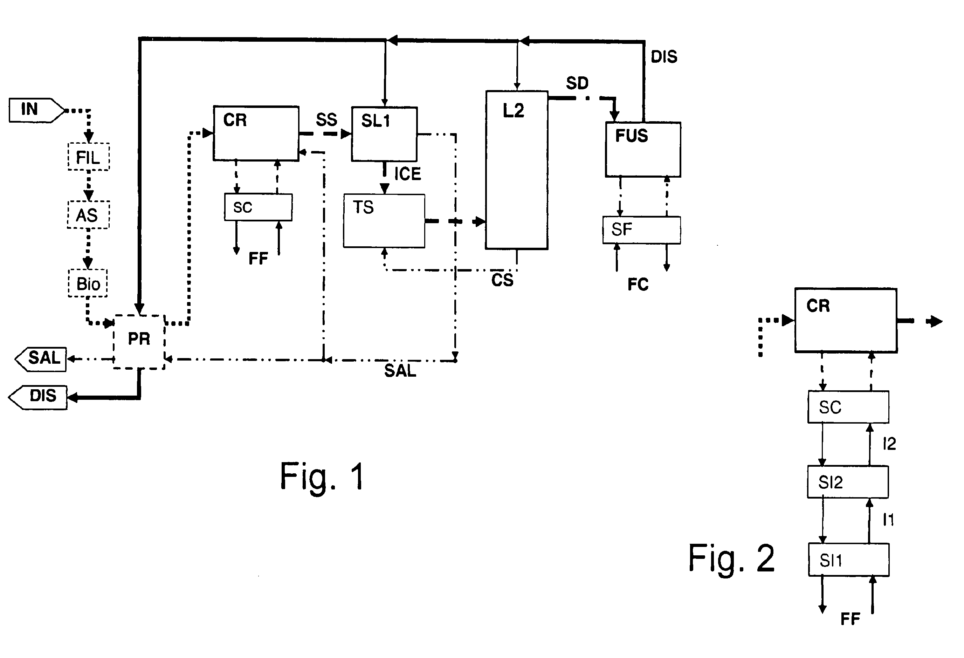

An embodiment of the present invention is now provided, applied to seawater with the help of figure 1 which, however, should not be considered as limiting the scope of the invention itself.

The stream to be treated (IN) is taken and preferably sent to a series of pretreatments ((FIL): Filtration and Sedimentation; (AS): Addition of Anti-scaling agents; (Bio): Addition of Biocide) which contribute to the good maintenance of the plant. The pretreated stream is then precooled in a suitable exchanger (PR) recovering frigories from the desalinated water (DIS) and brine (SAL) streams leaving the plant.

The precooled seawater is sent to a crystallizer in suspension (CR) with external cooling (SC) where it is partially frozen exploiting the frigories contained in the cold fluid (FF), preferably LNG, which is to be vaporized.

The stream of ice and brine (SS) leaving the crystallizer is sent to the separation and first washing phase (SL1) and subsequently to the second washing phase (L2). The separation and first washing are effected at the same time in a single apparatus, for example in vacuum filters with washing of the filtrate or in centrifuges with internal washing. The ice (ICE) leaving the first washing is fluidized again in a specific tank (TS),by the addition of an aqueous stream (CS) taken from the second washing, and sent to the second washing (L2), effected for example in an elutriation column, to reach the desired concentration of salts.

The stream of ice and desalinated water (SD) leaving the washing phases is sent to a melting unit (FUS), where the ice is melted by means of heat exchange (SF) with an available heat source (for example water).

The streams of desalinated water produced (DIS) and brine leaving the separation (SAL) are, as already described above, used for the precooling of the pretreated stream or the stream to be treated.

Figure 2 schematizes the particular case of the freezing of the aqueous stream effected with the use of two intermediate fluids in addition to the cold fluid. The precooled seawater is sent to a crystallizer in suspension (CR) with external cooling (SC) where it is partially frozen exploiting the frigories contained in the second intermediate fluid (12), which exchanges heat in a specific exchanger (SI2) with the first intermediate fluid (I1), which in turn exchanges heat in a second exchanger (SI1) with the cold fluid (FF), preferably LNG, which is to be vaporized.

An embodiment example of the present invention is provided effected according to the schemes of figures 1 and 2 described above.

### Example

A flow-rate of 7040 ton/h of seawater is taken and sent to a series of pretreatments (Filtration and Sedimentation, Addition of Anti-scaling agent, Addition of Biocide). The seawater, taken at about 15°C, is sent to a precooling unit where it exchanges heat with the streams of desalinated water (1860 ton/h) and waste brine (5180 ton/h) leaving the plant.

The seawater precooled to approximately 0°C is sent to a crystallizer where it is partially frozen exploiting the frigories contained in the stream of LNG (1050 ton/h) at - 160°C which is to be vaporized. The temperature inside the crystallizer is -3°C. The solution selected for the crystallization is a crystallizer in suspension with external cooling (of the "Draft tube Baffle" type or with forced circulation).

In particular, two intermediate fluids were also used, with relative exchange circuits, of which the first intermediate fluid (propane) exchanges in a closed circuit on one side with LNG, passing from -10°C to -50°C, on the other side with the second intermediate fluid, passing from -50°C to -10°C. The second intermediate fluid (aqueous solution at 20% of NaCl) exchanges in a circuit on one side with the first intermediate fluid, thus being cooled from -5°C to -12°C, on the other side with the crystallizer, thus being heated from -12°C to -5°C absorbing heat from the suspension of ice and brine which circulates between the crystallizer and the heat exchanger.

A stream of ice and brine is taken at the outlet of the crystallizer to be sent to the separation and first washing phases. The separation and first washing are effected at the same time in a single apparatus (vacuum filters with washing of the filtrate). The ice leaving the first washing is fluidized again in a tank, by the addition of an aqueous stream (5000 ton/h) taken from the second washing, and sent to the second washing, carried out in an elutriation column, to reach the desired salts concentration.

The stream of ice and desalinated water leaving the washing phases is sent to a melting unit where the ice is melted by heat exchange with water at a temperature higher than 10°C. The streams of desalinated water produced and brine leaving the separation are sent to the precooling of the seawater.

## Claims

1. A process for the reduction of the concentration of salts in an aqueous stream containing them comprising the following steps:
• production of ice by continuous crystallization in suspension obtained by the partial freezing of said aqueous stream, effected by means of indirect heat exchange with a cold fluid having a temperature lower than or equal to -2°C;
• separation between the ice produced and the concentrated brine obtained by partial freezing and subsequent washing of the ice in one or more steps;
• melting of the separated and washed ice to obtain an aqueous stream with a reduced concentration of salts.

2. The process according to claim 1, wherein the cold fluid having a temperature equal to or lower than -2°C absorbs heat passing from the liquid state to the gaseous state.

3. The process according to claim 1, wherein the cold fluid having a temperature equal to or lower than -2°C absorbs heat in supercritical conditions.

4. The process according to claim 2 or 3, wherein the cold fluid is selected from LGN, LPG, LH₂, LN₂, LO₂, LCO₂.

5. The process according to claim 4, wherein the cold fluid is LNG.

6. The process according to claim 1, wherein the aqueous stream containing salts is seawater or an industrial waste containing saline pollutants.

7. The process according to claim 1, wherein the continuous crystallization step in suspension is effected by means of two apparatuses, a crystallizer and a heat exchanger in which the aqueous stream is circulated for cooling.

8. The process according to claim 7, wherein the crystallizer is of the "Draft Tube Baffle" type or with forced circulation.

9. The process according to claim 7 or 8, wherein the aqueous stream to be frozen has velocities inside the exchanger greater than or equal to 1 m/s and inside the crystallizer velocities greater than ice crystals floating velocity.

10. The process according to claim 1, wherein the separation step is effected by means of rotating vacuum filters or by centrifuge.

11. The process according to claim 1, wherein the washing is effected in two steps.

12. The process according to claims 10 and 11, wherein the first washing step is effected directly or on the filter or in the centrifuge, the second step by means of an elutriation column.

13. The process according to claim 1, wherein the ice melting step is effected by means of an exchanger with a source having a temperature higher than 0°C.

14. The process according to claim 1, wherein, before being sent to the ice production step, the aqueous stream is subjected to precooling.

15. The process according to claim 14, wherein the precooling of the aqueous stream is effected by heat exchange with the aqueous stream at a reduced concentration of salts obtained and/or the concentrated brine obtained in the ice separation.

16. The process according to claim 5, wherein one or more intermediate fluids are used, in addition to LNG, which allow to reduce the temperature difference.

17. The process according to claim 16, wherein there are two intermediate fluids, with relative exchange circuits, of which:
• the first intermediate fluid exchanges in a closed circuit on one side with LNG, having an inlet temperature ranging from -15°C to -5°C and the outlet temperature ranging from ranging from -30°C to -60°C. The LNG, which is at an inlet temperature ranging from - 162°C to -130°C is heated and/or vaporized to a temperature ranging from -60°C to 10°C.
• the first intermediate fluid exchanges on the other side with the second intermediate fluid, having an inlet temperature ranging from -30°C to -60°C and an outlet temperature ranging from -15°C and -5°C.
• the second intermediate fluid exchanges in a closed circuit on one side with the first intermediate fluid, having an inlet temperature ranging from -2°C to -10°C and an outlet temperature ranging from -17°C and -9°C.
• the second intermediate fluid exchanges on the other side with the crystallizer for the production of ice, having an inlet temperature ranging from -17°C to -9°C and an outlet temperature ranging from -2°C and -10°C.

## Patentansprüche

1. Verfahren zur Reduktion der Konzentration an Salzen in einem wässrigen Strom, der diese enthält, umfassend die folgenden Schritte:
- Herstellen von Eis durch kontinuierliche Kristallisation in Suspension erhalten durch das partielle Einfrieren des genannten wässrigen Stroms, bewirkt mittels indirektem Wärmeaustausch mit einem kalten Fluid, das eine Temperatur von niedriger als oder gleich -2 °C aufweist;
- Separieren zwischen dem hergestellten Eis und der konzentrierten Sole erhalten durch partielles Einfrieren und anschließend Waschen des Eises in einem oder mehreren Schritten;
- Schmelzen des separierten und gewaschenen Eises, um einen wässrigen Strom mit einer reduzierten Konzentration an Salzen zu erhalten.

2. Verfahren nach Anspruch 1, wobei das kalte Fluid, das eine Temperatur von gleich oder niedriger als -2 °C aufweist, übergehend von dem flüssigen Zustand in den Gaszustand Wärme absorbiert.

3. Verfahren nach Anspruch 1, wobei das kalte Fluid, das eine Temperatur von gleich oder niedriger als -2 °C aufweist, in überkritischen Zuständen Wärme absorbiert.

4. Verfahren nach Anspruch 2 oder 3, wobei das kalte Fluid ausgewählt ist aus LGN, LPG, LH₂, LN₂, LO₂, LCO₂.

5. Verfahren nach Anspruch 4, wobei das kalte Fluid LNG ist.

6. Verfahren nach Anspruch 1, wobei der wässrige Strom, der Salze enthält, Seewasser oder ein industrieller Abfall, der Saline-Schadstoffe enthält, ist.

7. Verfahren nach Anspruch 1, wobei der kontinuierliche Kristallisationsschritt in Suspension bewirkt wird durch zwei Apparate, einen Kristallisator und einen Wärmeaustauscher in denen der wässrige Strom zum Kühlen zirkuliert wird.

8. Verfahren nach Anspruch 7, wobei der Kristallisator vom "Leitrohrprall"-Typ oder mit forcierter Zirkulation ist.

9. Verfahren nach Anspruch 7 oder 8, wobei der einzufrierende wässrige Strom Geschwindigkeiten innerhalb des Austauschers von größer als oder gleich 1 m/s und innerhalb des Kristallisators Geschwindigkeiten, die größer sind als die Geschwindigkeiten der fließenden Eiskristalle, aufweist.

10. Verfahren nach Anspruch 1, wobei der Separationsschritt bewirkt wird mittels rotierenden Vakuumfiltern oder durch Zentrifuge.

11. Verfahren nach Anspruch 1, wobei das Waschen in zwei Schritten bewirkt wird.

12. Verfahren nach den Ansprüchen 10 und 11, wobei der erste Waschschritt direkt oder auf dem Filter oder in der Zentrifuge bewirkt wird, der zweite Schritt mittels einer Elutriationssäule.

13. Verfahren nach Anspruch 1, wobei der Eisschmelzschritt bewirkt wird mittels eines Austauschers mit einer Quelle, die eine Temperatur von höher als 0°C aufweist.

14. Verfahren nach Anspruch 1, wobei der wässrige Strom einem Vorkühlen unterworfen wird bevor der wässrige Strom zum Eis Herstellungsschritt befördert wird.

15. Verfahren nach Anspruch 14, wobei das Vorkühlen des wässrigen Stroms bewirkt wird durch Wärmeaustausch mit dem wässrigen Strom bei einer reduzierten Konzentration an Salzen erhalten und/oder der konzentrierten Sole erhalten in der Eisseparation.

16. Verfahren nach Anspruch 5, wobei ein oder mehrere Zwischen-Fluide verwendet werden, zusätzlich zu LNG, die ein Reduzieren der Temperaturdifferenz erlauben.

17. Verfahren nach Anspruch 16, wobei es zwei Zwischen-Fluide gibt, mit relativen Austauschkreisläufen, bei denen:
- das erste Zwischen-Fluid in einem geschlossenen Kreislauf auf einer Seite mit LNG, das eine Einlasstemperatur in einem Bereich von -15°C bis -5°C und der Auslasstemperatur in einem Bereich von -30°C bis -60°C aufweist, austauscht. Das LNG, das bei einer Einlasstemperatur in einem Bereich von -162°C bis -130°C liegt, wird erhitzt und/oder verdampft zu einer Temperatur in einem Bereich von -60°C bis 10°C.
- das erste Zwischen-Fluid tauscht auf der anderen Seite mit dem zweiten Zwischen-Fluid aus, das eine Einlasstemperatur in einem Bereich von -30°C bis -60°C und eine Auslasstemperatur in einem Bereich von -15°C und -5°C aufweist.
- das zweite Zwischen-Fluid tauscht in einem geschlossenen Kreislauf auf einer Seite mit dem ersten Zwischen-Fluid aus, das eine Einlasstemperatur in einem Bereich von -2°C bis -10°C und eine Auslasstemperatur in einem Bereich von -17°C bis -9°C aufweist.
- das zweite Zwischen-Fluid tauscht auf der anderen Seite mit dem Kristallisator für die Herstellung von Eis aus, das eine Einlasstemperatur in einem Bereich von -17°C bis -9°C und eine Auslasstemperatur in einem Bereich von -2°C bis -10°C aufweist.

## Revendications

1. Procédé de réduction de la concentration en sels dans un courant aqueux les contenant comprenant les étapes suivantes :
• la production de glace par cristallisation continue en suspension obtenue par la congélation partielle dudit courant aqueux, effectuée au moyen d'un échange de chaleur indirect avec un fluide froid dont la température est inférieure ou égale à -2 °C ;
• la séparation de la glace produite et de la saumure concentrée obtenue par congélation partielle et lavage ultérieur de la glace en une ou plusieurs étapes ;
• la fusion de la glace séparée et lavée afin d'obtenir un courant aqueux avec une concentration réduite en sels.

2. Procédé selon la revendication 1, dans lequel le fluide froid de température inférieure ou égale à -2 °C absorbe la chaleur et passe de l'état liquide à l'état gazeux.

3. Procédé selon la revendication 1, dans lequel le fluide froid de température inférieure ou égale à -2 °C absorbe la chaleur dans des conditions supercritiques.

4. Procédé selon la revendication 2 ou 3, dans lequel le fluide froid est choisi parmi GNL, GPL, LH₂, LN₂, LO₂, LCO₂.

5. Procédé selon la revendication 4, dans lequel le fluide froid est le GNL.

6. Procédé selon la revendication 1, dans lequel le courant aqueux contenant des sels est de l'eau de mer ou des déchets industriels contenant des polluants salins.

7. Procédé selon la revendication 1, dans lequel l'étape de cristallisation continue en suspension est effectuée au moyen de deux appareils, un cristalliseur et un échangeur de chaleur dans lesquels le courant aqueux est mis en circulation pour refroidissement.

8. Procédé selon la revendication 7, dans lequel le cristalliseur est du type « chicane à tube d'aspiration » ou à circulation forcée.

9. Procédé selon la revendication 7 ou 8, dans lequel le courant aqueux à congeler présente des vitesses à l'intérieur de l'échangeur supérieures ou égales à 1 m/s et des vitesses à l'intérieur du cristalliseur supérieures à la vitesse de flottaison des cristaux de glace.

10. Procédé selon la revendication 1, dans lequel l'étape de séparation est effectuée au moyen de filtres rotatifs sous vide ou par centrifugeuse.

11. Procédé selon la revendication 1, dans lequel le lavage est effectué en deux étapes.

12. Procédé selon les revendications 10 et 11, dans lequel la première étape de lavage est effectuée directement ou sur le filtre ou dans la centrifugeuse, la seconde étape au moyen d'une colonne d'élutriation.

13. Procédé selon la revendication 1, dans lequel l'étape de fusion de la glace est effectuée au moyen d'un échangeur dont la source a une température supérieure à 0 °C.

14. Procédé selon la revendication 1, dans lequel, avant d'être envoyé à l'étape de production de glace, le courant aqueux est soumis à un prérefroidissement.

15. Procédé selon la revendication 14, dans lequel le prérefroidissement du courant aqueux est effectué par échange de chaleur avec le courant aqueux à une concentration réduite en sels obtenus et/ou avec la saumure concentrée obtenue dans la séparation de glace.

16. Procédé selon la revendication 5, dans lequel on utilise un ou plusieurs fluides intermédiaires, en plus du GNL, qui permettent de réduire la différence de température.

17. Procédé selon la revendication 16, dans lequel il y a deux fluides intermédiaires, avec des circuits d'échange relatif, dont :
• le premier fluide intermédiaire opère un échange dans un circuit fermé d'un côté avec le GNL, dont la température d'entrée varie de -15 °C à -5 °C et la température de sortie varie de -30 °C à -60 °C ; le GNL, dont la température d'entrée varie de -162 °C à -130 °C, est chauffé et/ou vaporisé à une température allant de -60 °C à 10 °C ;
• le premier fluide intermédiaire opère un échange de l'autre côté avec le second fluide intermédiaire, dont la température d'entrée varie de -30 °C à - 60 °C et la température de sortie varie de -15 °C à -5 °C ;
• le second fluide intermédiaire opère un échange dans un circuit fermé d'un côté avec le premier fluide intermédiaire, dont la température d'entrée varie de -2 °C à -10 °C et la température de sortie varie de -17 °C à -9 °C ;
• le second fluide intermédiaire opère un échange de l'autre côté avec le cristalliseur pour la production de glace, dont la température d'entrée varie de -17 °C à -9 °C et la température de sortie varie de -2 °C à -10 °C.
